# EUROPÄISCHE PATENTANMELDUNG

(11) **EP 0 893 623 A1**
(43) Veröffentlichungstag der Anmeldung: **27.01.1999**
(21) Anmeldenummer: 98110879.8
(22) Anmeldetag: 15.06.1998
(51) Int. Cl.: F16H 25/22

(54) **Wälzspindel und Bremsaktuator mit einer solchen Wälzspindel**

(30) Priorität: 23.07.1997 DE 19731626
(71) Anmelder: Continental Aktiengesellschaft, 30165 Hannover (DE)
(72) Erfinder: Leitermann, Wulf, 30163 Hannover (DE); Dieckmann, Thomas, Dr., 30982 Pattensen (DE); Beck, Joachim, 72458 Albstadt 1 (DE); Klöblen, Wolfgang, 72760 Reutlingen (DE)

(57) **Zusammenfassung**

Die Erfindung betrifft eine Wälzspindel 2 mit einer Spindelstange 4 und einer Spindelmutter 6 und Wälzkörpern 10, die zwischen der Spindelmutter 6 und der Spindelstange 4 gelagert sind, wobei die Spindelstange 4 und die Spindelmutter 6 relativ zueinander beweglich sind und bei einer Relativbewegung der Spindelstange zur Spindelmutter 6 die Wälzkörper 10 aus einer Ausgangsposition verschoben werden. Die Wälzkörper 10 sind in einem mit einer Rückstellfeder 12 belasteten Käfig 8 gelagert, mit dem die Wälzkörper 10 nach erfolgter Verschiebung aus der Ausgangsposition bei ruhender Spindelstange 4 und Spindelmutter 6 in die Ausgangsposition zurückführbar sind. Somit kann auf eine konventionelle Rückführung der Wälzkörper 10 mit Hilfe von aufwendigen Rückführungskanälen in der Spindelmutter 6 verzichtet werden.

## Beschreibung

Die Erfindung betrifft eine Wälzspindel mit einer Spindelstange und einer Spindelmutter und Wälzkörpern, die zwischen der Spindelmutter und der Spindelstange gelagert sind, wobei die Spindelstange und die Spindelmutter relativ zueinander beweglich sind und bei einer Relativbewegung der Spindelstange zur Spindelmutter die Wälzkörper aus einer Ausgangsposition verschoben werden.

Derartige Wälzspindeln sind aus dem Stand der Technik an sich bereits bekannt und weisen einen hohen Wirkungsgrad auf, da die zwischen der Spindelstange und der Spindelmutter gelagerten Wälzkörper die Reibungsverluste bei einer Relativbewegung zwischen der Spindelstange und der Spindelmutter erheblich reduzieren. Bei einer Relativbewegung zwischen der Spindelstange und der Spindelmutter werden die Wälzkörper aus ihrer Ausgangsposition verschoben. Um zu verhindern, dass die Wälzkörper bei einer großen relativen Verschiebung den Bereich zwischen der Spindelmutter und der Spindelstange verlassen und dann aus ihrer Führung herausfallen, enthalten die Wälzspindeln eine Wälzkörperrückführung. Eine derartige Walzkörperrückführung kann beispielsweise so aufgebaut sein, dass der vordere Wälzkörper aus der Führung zwischen der Spindelmutter und der Spindelstange herausgeschoben wird, durch die die Spindelmutter zurückgeführt wird und hinter dem letzten Wälzkörper wieder in die Führung zwischen der Spindelmutter und der Spindelstange eingelegt wird. Es entsteht somit eine "zyklische" Führung der Wälzkörper in der Spindelmutter.

Wegen der zyklischen Rückführung der Wälzkörper ist die Relativbewegung zwischen der Spindelmutter und der Spindelstange nur durch die Länge der Spindelstange beschränkt, die Gefahr, dass ein Wälzkörper aus seiner Führung zwischen der Spindelmutter und der Spindelstange herausfällt, besteht nicht. Wälzspindeln mit Rückführungskanälen sind jedoch für einen Großserieneinsatz nicht geeignet, da sie aufwendig zu fertigen und somit teuer sind.

Der Erfindung liegt die Aufgabe zugrunde, eine Wälzspindel zu schaffen, die einen hohen Wirkungsgrad aufweist und einfach und somit kostengünstig zu fertigen ist.

Ausgehend von einer Wälzspindel der eingangs genannten Art wird die Aufgabe gemäß den kennzeichnenden Merkmalen des Anspruchs 1 dadurch gelöst, dass die Wälzkörper in einem mit einer Rückstellfeder belasteten Käfig gelagert sind, mit dem die Wälzkörper nach erfolgter Verschiebung aus der Ausgangsposition bei ruhender Spindelstange und Spindelmutter in diese zurückführbar sind.

Der Grundgedanke der Erfindung ist darin zu sehen, dass eine Rückführung der Wälzkörper nicht während einer Relativbewegung zwischen der Spindelmutter und der Spindelstange stattfindet, sondern mit Hilfe des mit einer Rückstellfeder belasteten Käfigs bei ruhender Spindelstange und Spindelmutter (die Wälzkörper weisen bei der Rückführung in ihre Ausgangspositon also einen Schlupf gegenüber der Spindelmutter und der Spindelstange auf).

Die mit der Erfindung erzielten Vorteile sind insbesondere darin zu sehen, dass durch einen Verzicht der Rückführung der Wälzkörper während einer Relativbewegung zwischen der Spindel und der Spindelmutter auf aufwendige Rückführungskanäle verzichtet werden kann, so dass sich der Aufbau der Wälzspindel stark vereinfacht und die Wälzspindel somit kostengünstig zu fertigen ist. Ein weiterer Vorteil der Erfindung ist darin zu sehen, dass sich die Baulänge der erfindungsgemäßen Wälzspindel gegenüber aus dem Stand der Technik bekannten Wälzspindeln nicht vergößert, da eine Rückführung der Wälzkörper in ihre Ausgangsposition bei ruhender Spindelstange und ruhender Spindelmutter mit Hilfe des mit einer Rückstellfeder belasteten Käfigs erfolgt. Somit nehmen die Wälzkörper bei jeder erneuten Relativbewegung zwischen der Spindelmutter und der Spindelstange wieder die gleiche Ausgangsposition ein. Ein weiterer Vorteil der Erfindung ist darin zu sehen, dass die Kraftübertragungsfähigkeit der Wälzspindel gesteigert werden kann, indem man in den Käfig eine große Anzahl von Wälzkörpern einlagert und somit eine große Wälzkörperdichte erreicht. Dazu braucht der grundsätzliche Aufbau der Wälzspindel nicht geändert zu werden.

Die erfindungsgemäße Wälzspindel lässt sich besonders vorteilhaft in einem Bremsaktuator für eine elektrische Bremsanlage einsetzen. Der Bremaktuator weist einen Elektromotor und eine Zuspannvorrichtung in Form eines Spindeltriebes auf, die mit dem Elektromotor in Wirkverbindung steht. Bei einer Betätigung der Bremsanlage wird der Elektromotor angetrieben und durch die Drehung der Motorwelle des Elektromotors wird die Spindelmutter des Spindeltriebes, die sich mit der Motorwelle in Eingriff befindet, ebenfalls in Drehung versetzt. Die Drehung der Spindelmutter wird in einer Axialbewegung der Spindelstange umgewandelt und mit Hilfe der Spindelstange werden Bremsbeläge gegen eine Bremsscheibe gepresst, so dass an dem entsprechenden Rad, dem die Bremsscheibe zugeordnet ist, eine Bremskraft entsteht. Im Folgenden wird kurz erläutert, aus welchen Gründen die erfindungsgemäße Wälzspindel besonders vorteilhaft in einem Bremsaktuator einsetzbar ist:

Bei einem Bremsvorgang beträgt der Zustellweg zwischen der Anfangsposition der Spindelstange (Beginn der Bremsvorganges) und der Endposition der Spindelstange (Position, in der die Bremsbeläge mit maximaler Kraft an die Bremsscheibe gepresst sind) lediglich ca. 1 mm. Bei einer derartig kleinen axialen Verschiebung der Spindelstange zu der (ortsfesten) Spindelmutter kann während der relativen Bewegung der Spindelstange zu der Spindelmutter auf eine Rückführung der Wälzkörper verzichtet werden, da bei einer derartig kleinen relativen Verschiebung nicht die Gefahr besteht, dass einer der Wälzkörper aus seiner Führung zwischen der Spindelmutter und der Spindelstange herausfällt. Während eines Bremsvorganges werden die Bremsbeläge minimal abgenutzt. Um nach Beendigung eines Bremsvorganges wieder den gleichen Luftspalt zwischen den Bremsbelägen und der Bremsscheibe einzustellen, wird die Spindelstange um einen Weg zurückgeschoben, der geringfügig kleiner ist, als der Zustellweg bei Einleitung des Bremsvorganges, so dass die Spindelstange nach Beendigung des Bremsvorganges eine (minimale) andere Anfangsposition einnimmt als bei Beginn des Bremsvorganges. Somit werden die Wälzkörper durch eine Zurückführung der Spindelstange in ihre erneute Anfangsposition nicht in die Ausgangsposition zurückbewegt, die sie vor Einleitung des Bremsvorganges eingenommen haben. Die Wälzkörper werden aber durch den mit einer Rückstellfeder belasteten Käfig bei ruhender Spindelstange und Spindelmutter in die Ausgangsposition zurückgeschoben, die sie vor Einleitung des Bremsvorganges eingenommen haben. Somit ist bei der Einleitung eines erneuten Bremsvorganges die Spindelstange zwar gegenüber der Spindelmutter minimal verschoben, die Wälzkörper nehmen bei jedoch die gleiche Ausgangsposition ein. Durch zunehmende Abnutzung der Bremsbeläge bei einer großen Anzahl von Bremsvorgängen kommt es zu einer relativen Verschiebung der Anfangsposition der Spindelstange gegenüber der Spindelmutter von ca. 25 mm, wobei jedoch die Ausgangsposition der Wälzkörper immer erhalten bleibt.

Gemäß einer Weiterbildung der Erfindung sind die Wälzkörper unter Spiel zwischen der Spindelstange und der Spindelmutter gelagert. Der Vorteil dieser Weiterbildung ist darin zu sehen, dass das Spiel der Wälzkörper zu der Spindelstange und der Spindelmutter eine Rückführung der Wälzkörper mit Hilfe des Käfigs bei ruhender Spindelstange und ruhender Spindelmutter vereinfacht.

Gemäß einer weiteren Weiterbildung enthält die Spindelmutter einen Anschlag, der den Verschiebeweg des Käfigs und damit der Wälzkörper aus der Ausgangsposition begrenzt. Der Vorteil dieser Weiterbildung ist darin zu sehen, dass die Wälzkörper und der Käfig relativ zu der Spindelmutter nur um diesen Verschiebeweg bewegt werden kann. Somit ist ausgeschlossen, dass es zu einer zu großen Relativbewegung zwischen dem Käfig bzw. den Wälzkörpern und der Spindelmutter kommt, die dazu führen könnte, dass die Wälzkörper aus ihrer Lagerung zwischen der Spindelstange und der Spindelmutter herausgeführt werden. Vorzugsweise ist die Rückstellfeder bei Vorhandensein eines Anschlages in der Wälzspindel zwischen dem Anschlag und dem Käfig angeordnet.

Gemäß einer weiteren Weiterbildung der Erfindung wird die Rückführung der Wälzkörper in ihre Ausgangsposition mit Hilfe des Käfigs durch eine Vibration der Spindelstange und/oder der Spindelmutter unterstützt. Eine derartige Vibration kann bei einem Bremsaktuator beispielsweise dadurch herbeigeführt werden, dass der Elektromotor so betätigt wird, dass die Spindelstange um einen kleinen Weg hin- und hergefahren wird, wobei die Spindelstange im Mittel ihre Position nicht verändert.

Ein Ausführungsbeispiel und weitere Vorteile der Erfindung werden im Zusammenhang mit den nachstehenden Figuren erläutert, darin zeigt:
- Figur 1: eine Wälzspindel,
- Figur 2: einen Bremsaktuator mit Wälzspindel.

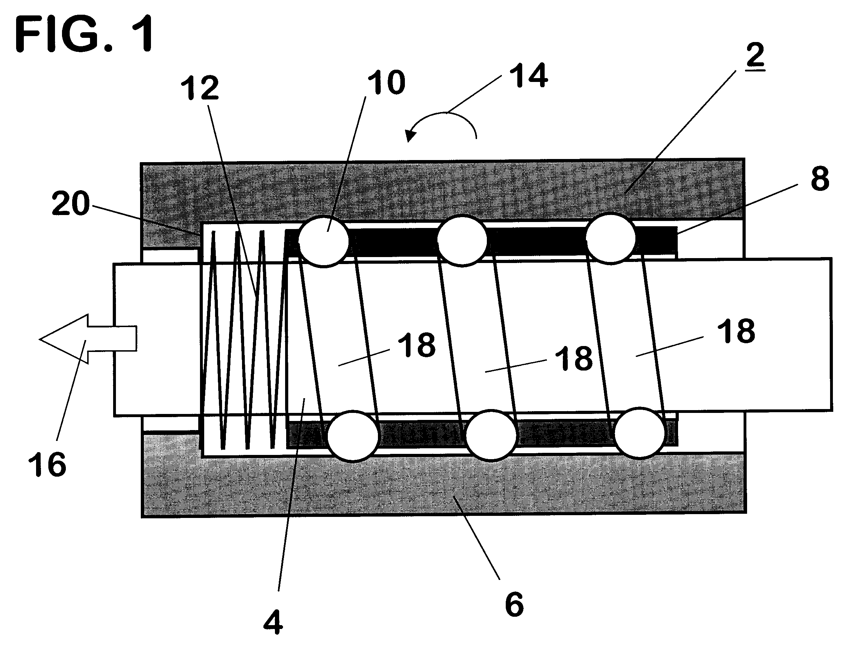

Figur 1 zeigt eine Wälzspindel 2 mit einer Spindelstange 4 und einer Spindelmutter 6. Zwischen der Spindelstange 4 und der Spindelmutter 6 sind Wälzkörper 10, hier in Form von Kugeln, gelagert. Dazu weisen die Spindelstange 4 und die Spindelmutter 6 jeweils eine schraubenförmig ausgebildete Rille 18 ab, die zusammen also einen schraubenförmig ausgebildeten "Kanal" bilden. Die Kugeln 10 werden von einem Käfig 8 umfasst, der sich ebenfalls zwischen der Spindelstange 4 und der Spindelmutter 6 befindet und die Spindelstange 4 wie ein "Rohr" axial umschließt. Der Käfig 8 ist mit einer Rückstellfeder 12 belastet, die sich zwischen dem Anschlag 20 und dem Käfig 8 befindet und die Spindelstange 4 ebenfalls axial umfasst. Im Folgenden wird angenommen, dass die Spindelmutter 6 in axialer Richtung nicht beweglich ist, jedoch um die Längsachse der Spindelstange 4 drehbar gelagert ist. Ferner wird angenommen, dass die Spindelstange 4 drehfest gelagert ist, jedoch in Richtung ihrer Längsachse axial beweglich ist. Unter diesen Voraussetzungen geschieht bei einer Drehung der Spindelmutter 6 in Richtung des Pfeiles 14 um ihre Längsachse folgendes:

Die Kugeln 10 rollen in der Rille 18 der Spindelstange 4 ab, und es kommt zu einer axialen Bewegung der Spindelstange 4 und des Käfigs 8 mit den darin befindlichen Kugeln 10 in Richtung des Pfeiles 16, wobei der Käfig 8 die Hälfte des Weges zurücklegt wie die Spindelstange 4. Unter Einfluss dieser Axialbewegung wird die zwischen dem Anschlag 20 und dem Käfig 8 befindliche Rückstellfeder 12 zusammengedrückt. Der Figur ist zu entnehmen, dass die axiale Bewegung der Spindelstange 4 bzw. die axiale Bewegung des Käfigs 8 mit den darin befindlichen Kugeln 10 bei einem Betätigungsvorgang der Wälzspindel 2 durch den Anschlag 20 begrenzt ist.

Wird auf die Spindelmutter 6 kein Drehmoment mehr ausgeübt, befindet sich die Spindelmutter 6 und die Spindelstange 4 in Ruhe. In diesem lastfreien Zustand kann sich die Rückstellfeder 12 entgegen der Pfeilrichtung des Pfeiles 16 entspannen und durch die Entspannung der Rückstellfeder 12 wird der Käfig 8 mit den darin befindlichen Kugeln 10 in die in der Figur 1 gezeigte Ausgangsposition zurückgeschoben. Hierbei rollen oder gleiten die Kugeln 10 wiederum in der Rille 18 der Spindelstange 4 oder der Spindelmutter 6 ab, es kommt also zu einer Axial- und Rotationsbewegung des Käfigs 8.

Bei einer erneuten Drehung der Spindelmutter 6 in Richtung des Pfeiles 14 kommt es wiederum zu einer Axialbewegung der Spindelstange 4 und des Käfigs 8 mit den darin enthaltenen Kugeln 10. Hierbei beginnt der Käfig 8 und damit die in ihm gelagerten Kugeln 10 ihre axiale Bewegung wiederum aus der in der Figur 1 gezeigten Ausgangsposition.

Es ist festzustellen, dass die im Zusammenhang mit der Figur 1 gewählte Kinematik nur beispielhaft gewählt ist. Selbstverständlich ist es alternativ möglich, anstatt der Spindelmutter 6 die Spindelstange 4 drehbar zu lagern. In diesem Falle ist die Spindelmutter 6 drehfest und axial beweglich gelagert, so dass sie sich bei einer Drehung der Spindelstange 4 um ihre Längsachse in axialer Richtung bewegt.

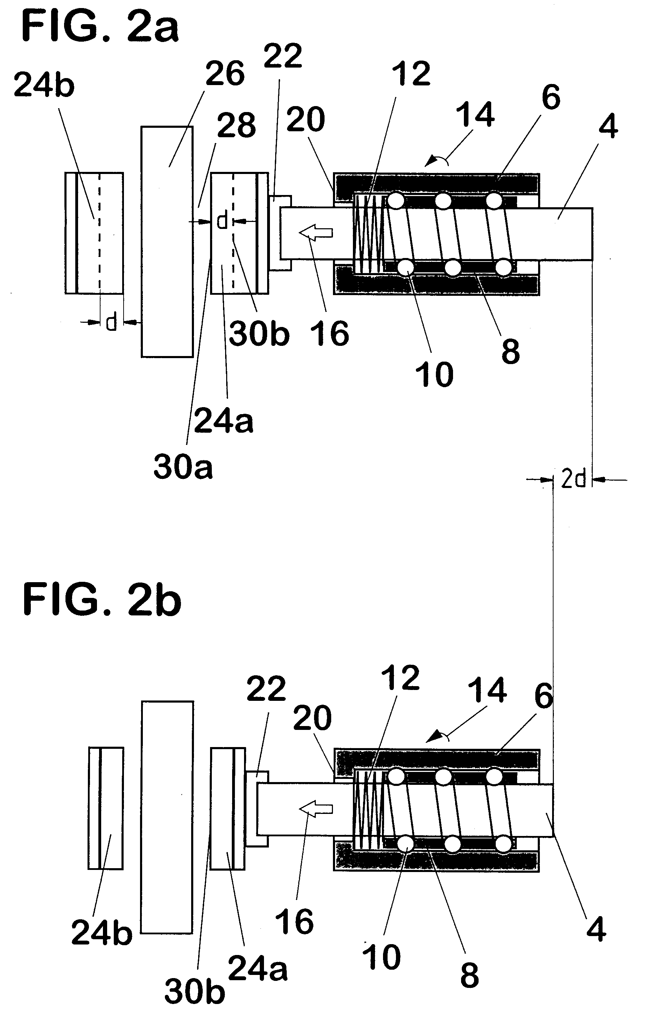

Figur 2 zeigt in schematischer Darstellung einen Bremsaktuator mit einer Wälzspindel gemäß Figur 1, wobei in Figur 2 nur die zum Verständnis der nachfolgenden Erläuterungen notwendigen Bestandteile dargestellt sind. Figur 2a zeigt einen Bremsaktuator vor einem Bremsvorgang in seiner "Ruhestellung". Bei einem Bremsvorgang wird auf die Spindelmutter 6 mit Hilfe eines (nicht gezeigten) Elektromotors ein Drehmoment derart ausgeübt, dass sich die Spindelmutter 6 in Richtung des Pfeiles 14 um ihre Längsachse dreht. Wie im Zusammenhang mit Figur 1 erläutert, wird dadurch die Spindelstange 4 und damit der Bremskolben 22 in Richtung des Pfeiles 16 in axiale Bewegung versetzt. Infolgedessen durchlaufen die Bremsbeläge 24a und 24b den Luftspalt 28 zwichen sich und der Bremsscheibe 26 und werden schließlich an die Bremsscheibe 26 gepresst, so dass auf das Rad, dem die Bremsscheibe 26 zugeordnet ist, eine Bremskraft ausgeübt wird. Der Zustellweg in Richtung des Pfeiles 16 der Spindelstange 4 beträgt bei einem Bremsvorgang ca. 1 mm und setzt sich zusammen aus der Breite des Luftspaltes und den elastischen Verformungen in der Bremsscheibe und den Bremsbelägen 24a und 24b etc.

Während des Bremsvorganges kommt es zu einem minimalen Verschleiß der Bremsbeläge 24a und 24b, so dass die Dicke des Bremsbelages 24a und des Bremsbelages 24b jeweils um den Betrag d abnimmt. Nach Beendigung des Bremsvorganges wird die Spindelstange 4 mit Hilfe der Spindelmutter 6 und des Elektromotors so weit zurückgefahren, dass die neue Stirnfläche 30b des Bremsbelages 24a (siehe Figur 2b) die gleiche Position einnimmt wie die alte Stirnfläche 30a (siehe Figur 2a) vor dem Bremsvorgang, so dass sich zwischen der Bremsscheibe 26 und dem Bremsbelag 24a wieder der gleiche Luftspalt 28 einstellt. Um dies zu erreichen, braucht die Spindelstange 4 offensichtlich nur um einen Weg zurückgefahren zu werden, der gegenüber dem Zustellweg um die Strecke 2d reduziert ist. Die Spindelstange 4 nimmt nach dem Bremsvorgang die in der Figur 2b gezeigte Position ein. Beim Zurückfahren der Spindelstange 4 in diese Position wird auch der Käfig 4 mit den darin enthaltenen Kugeln 10 zurückgefahren. Hierbei wird durch das Zurückfahren der Spindelstange 4 der Käfig 8 in eine Position zurückgefahren, die (in axialer Richtung des Pfeiles 16 gesehen) minimal vor der in der Figur 2a gezeigten Ausgangsposition liegt. Eine endgültige Rückführung des Käfigs 4 und der darin enthaltenen Kugeln 8 in die in den Figuren 2a und 2b gezeigte Ausgangsposition wird bei ruhender Spindelstange 4 und ruhender Spindelmutter 6 durch eine Entspannung der Rückstellfeder 12 erreicht. Bei dem nächsten Bremsvorgang beginnt die axiale Verschiebung des Käfigs 8 mit den darin enthaltenen Kugeln 10 wieder aus der in den Figuren 2a und 2b gezeigten Ausgangsposition.

Der Verschleiß der Bremsbeläge 24a und 24b beträgt im Laufe des "Lebens" der Bremsbeläge 24a und 24b zusammen ca. 25 mm. Demzufolge wandert die Spindelstange 4 im Laufe des Lebens der Bremsbeläge 24a und 24b gegenüber der in der Figur 2a gezeigten Position infolge der Verschleißnachstellung um 25 mm nach links. Dennoch nimmt der Käfig 8 mit den darin gelagerten Kugeln 10 vor jedem Bremsvorgang die gleiche Ausgangsposition ein, die in den Figuren 2a und 2b gezeigt ist.

### Bezugszeichenliste

- 2: Wälzspindel
- 4: Spindelstange
- 6: Spindelmutte
- 8: Käfig
- 10: Wälzkörper
- 12: Rückstellfeder
- 14: Pfeil
- 16: Pfeil
- 18: Rille, Aussparung
- 20: Anschlag
- 22: Bremskolben
- 24a, b: Bremsbelag
- 26: Bremsscheibe
- 28: Luftspalt
- 30a, b: Stirnfläche

## Patentansprüche

1. Wälzspindel (2) mit einer Spindelstange (4) und einer Spindelmutter (6) und Wälzkörpern (10), die zwischen der Spindelmutter (6) und der Spindelstange (4) gelagert sind, wobei die Spindelstange (4) und die Spindelmutter (6) relativ zueinander beweglich sind und bei einer Relativbewegung der Spindelstange (4) zur Spindelmutter (6) die Wälzkörper (10) aus einer Ausgangsposition verschoben werden,
**dadurch gekennzeichnet,** dass
die Wälzkörper (10) in einem mit einer Rückstellfeder (12) belasteten Käfig (8) gelagert sind, mit dem die Wälzkörper (10) nach erfolgter Verschiebung aus der Ausgangsposition bei ruhender Spindelstange (4) und ruhender Spindelmutter (6) in diese zurückführbar sind.

2. Wälzspindel (2) nach Anspruch 1, dadurch gekennzeichnet, dass die Wälzkörper (10) unter Spiel zwischen der Spindelstange (4) und der Spindelmutter (6) gelagert sind.

3. Wälzspindel (2) nach einem der Ansprüche 1 bis 2, dadurch gekennzeichnet, dass die Spindelmutter (6) einen Anschlag enthält, der den Verschiebeweg des Käfigs (8) und damit der Wälzkörper (10) aus der Ausgangsposition begrenzt.

4. Wälzspindel (2) nach einem der Ansprüche 1 bis 3, dadurch gekennzeichnet, dass die Rückstellfeder (12) zwischen dem Anschlag (20) und dem Käfig (8) angeordnet ist.

5. Wälzspindel (2) nach einem der Ansprüche 1 bis 4, dadurch gekennzeichnet, dass die Rückführung der Wälzkörper (10) in ihrer Ausgangsposition durch eine Vibration der Spindelstange (4) und/oder der Spindelmutter (6) unterstützt wird.

6. Bremsaktuator mit einem Elektromotor, der mit einer Wälzspindel (2) in Wirkverbindung steht, dadurch gekennzeichnet, dass die Wälzspindel (2) nach einem der Ansprüche 1 bis 5 ausgebildet ist.
